(19) Europäisches Patentamt
European Patent Office
Office européen des brevets

(11) Veröffentlichungsnummer: **0 232 873 B1**

(12) **EUROPÄISCHE PATENTSCHRIFT**

(45) Veröffentlichungstag der Patentschrift: **12.05.93**

(51) Int. Cl.$^5$: **C08L 63/08**, C08G 59/50, C08G 59/66, C03C 27/00

(21) Anmeldenummer: **87101698.6**

(22) Anmeldetag: **07.02.87**

Die Akte enthält technische Angaben, die nach dem Eingang der Anmeldung eingereicht wurden und die nicht in dieser Patentschrift enthalten sind.

(54) **Dicht- und Klebstoff.**

(30) Priorität: **12.02.86 DE 3604278**

(43) Veröffentlichungstag der Anmeldung:
**19.08.87 Patentblatt 87/34**

(45) Bekanntmachung des Hinweises auf die Patenterteilung:
**12.05.93 Patentblatt 93/19**

(84) Benannte Vertragsstaaten:
**DE FR GB NL SE**

(56) Entgegenhaltungen:
**DE-A- 1 596 780**
**DE-A- 2 424 264**
**FR-A- 2 020 040**
**GB-A- 1 526 926**
**US-A- 3 297 186**

**PATENT ABSTRACTS OF JAPAN, Band 4, Nr. 174 (C-33)[656] 2. Dezember 1980; & JP-A-55 115 442 (FUJITSU K.K.) 05-09-1980**

(73) Patentinhaber: **Teroson GmbH**
**Hans-Bunte-Strasse 4**
**W-6900 Heidelberg 1(DE)**

(72) Erfinder: **Duck, Edward, Prof. Dr.**
**Birkenweg 5**
**W-6901 Gaiberg(DE)**
Erfinder: **Reich, Karl, Dr.**
**Finkenhof 55**
**W-6719 Carlsberg(DE)**
Erfinder: **Blank, Norman, Dr.**
**Furtwänglerstrasse 37**
**W-6900 Heidelberg(DE)**

(74) Vertreter: **UEXKÜLL & STOLBERG Patentanwälte**
**Beselerstrasse 4**
**W-2000 Hamburg 52 (DE)**

EP 0 232 873 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Dicht- und Klebstoffe, wie sie insbesondere zur Herstellung von Isolierglasanordnungen benötigt werden.

Isolierglas hat sich im Bauwesen aufgrund seiner Vorzüge weitgehend durchgesetzt. Hervorzuheben sind insbesondere die verbesserte Wärme- und Geräuschdämmung gegenüber der Einfachverglasung.

Bei den handelsüblichen Isolierglasanordnungen sorgen starre Abstandhalter für den gewünschten Abstand zwischen den Glasscheiben. Die Abstandhalter sind in der Nähe der Ränder der Glasscheiben so angeordnet, daß die Abstandhalter zusammen mit den Randbereichen der Glasscheiben eine nach außen weisende Rinne zur Aufnahme von Dicht- und Klebstoffen bilden. Üblicherweise sind die Abstandhalter hohl und weisen in Richtung auf den toten Luftraum zwischen den Glasscheiben kleine Öffnungen auf. Der Hohlraum der Abstandhalter dient zur Aufnahme eines Trocknungsmittels zur Adsorption von Feuchtigkeit und Lösungsmittelresten im Luftraum zwischen den Scheiben. Dadurch wird verhindert, daß die Isolierglasanordnung bei niedrigen Umgebungstemperaturen von innen beschlägt. Normalerweise besteht der Abstandhalter aus einem Aluminiumprofil.

Zur dauerhaften Verbindung der vorstehend beschriebenen Anordnung haben sich zwei verschiedene Verfahren durchgesetzt, die als Einfachsystem und als Zweifachsystem bezeichnet werden.

Zur Herstellung eines Einfachsystems wird eine thermoplastische Dichtmasse, ein sogenannter "hot melt", in heißem Zustand in die nach außen weisende umlaufende Rinne der Anordnung eingebracht. Beim Abkühlen verfestigt sich die Dichtungsmasse und sorgt dann für eine mehr oder weniger dauerhafte adhäsive Verbindung der Scheiben. Daneben hat der Dichtstoff die Aufgabe, das Eindringen von Feuchtigkeit in den Luftraum zwischen den Glasscheiben zu verhindern. Da die Benetzung der Glasscheiben durch den Dichtstoff im erweichten Zustand unvollkommen ist, werden mit diesem Verfahren nur niedrige bis mittlere Festigkeiten der Isolierglasanordnung erzielt.

Entschieden höhere Festigkeit weist das Zweifachsystem auf. Zu dessen Herstellung wird zusätzlich in die Rinne ein reaktiver Klebstoff eingegossen, der zunächst im unvernetzten Zustand eine wesentlich bessere Benetzung der Glasoberfläche sicherstellt und der im vernetzten Zustand zusammen mit dem vorher auf das Metallprofil aufgebrachten Dichtstoff für ausreichende strukturelle Festigkeit sorgt.

Zur Herstellung von Einfachsystemen kommen vor allem Formulierungen auf Basis von Polyisobuten oder Butylkautschuk zur Anwendung. Zur Herstellung der Zweifachsysteme wird üblicherweise zusätzlich ein Zweikomponenten-Klebstoff auf Polysulfid- oder Polyurethanbasis verwendet.

Die Herstellung des Einfachsystems ist vergleichsweise einfacher und daher sind derartige Isolierglasanordnungen preiswerter. Dafür müssen jedoch schwerwiegende Nachteile in Kauf genommen werden. Wie bereits erwähnt, weist der Dichtstoff nur eine geringe bis mittlere Haftung auf den Glasscheiben auf. Hinzu kommt die auch bei Raumtemperatur noch ausgeprägte Kriechneigung, der sogenannte kalte Fluß.

Dieser bewirkt, daß der Dichtstoff insbesondere bei Erwärmung durch Sonneneinstrahlung langsam aus der Rinne oder Fuge fließt.

Die Herstellung eines Zweifachsystems ist sehr viel aufwendiger, da der zusätzliche Einsatz des Klebstoffs einen eigenen Arbeitsgang erfordert. Zweifachsysteme haben daher einen wesentlich höheren Preis.

Es sind verschiedene Vorschläge zur Verbesserung des preisgünstigen Einfachsystems gemacht worden. Bislang ist es jedoch nicht gelungen, einen hochwertigen Dichtstoff zu schaffen, der einem Einfachsystem ausreichende strukturelle Festigkeit zu verleihen vermag.

In der DE-OS 24 24 264 ist eine Fensteranordnung mit einer Dichtungsmasse beschrieben, die im wesentlichen aus etwa 20 bis 100 Gewichtsteilen eines elastischen Polymers, 15 bis 150 Gewichtsteilen an plastizierenden und verklebenden Harzen, 0 bis 44 Gewichtsteilen Adhäsionsbeschleunigern und 0 bis 150 Gewichtsteilen Füllstoffen und Pigmenten besteht. Das elastische Polymer kann ein Copolymer von Isobutylen und Isopren, ein Polyisobutylen, ein Styrol-Butadien-Polymer, ein Styrol-Isopren-Polymer, ein chlorierter Gummi oder ein festes Polysulfidpolymer sein.

In der US-PS 4 169 822 ist ein thermoplastischer Dicht- und Klebstoff beschrieben, der im wesentlichen aus einer Mischung aus 100 Gewichtsteilen einer polymeren elastomeren Verbindung, 1 bis 400 Gewichtsteilen klebrigmachender Harze, 15 bis 600 Gewichtsteilen Weichmacher, 0,5 bis 60 Gewichtsteilen Haftungsverbesserern und 5 bis 1000 Gewichtsteilen eines inerten Füllstoffs besteht. Die elastomere Verbindung kann ein Polyisobutylen, ein Butadien-Styrol-Copolymer, ein Styrol-Butadien-Styrol-Copolymer, ein Styrol-Isopren-Copolymer, ein chlorierter Gummi, ein Acrylkautschuk oder deren Mischung sein.

In der FR-OS 2 486 065 ist ein Verfahren zum Verkleben von Glas mit verschiedenen Materialien beschrieben, bei dem neben einem Dichtstoff ein separater Haftvermittler verwendet wird. Es werden

Dichtstoffe verwendet, die ein Polyisobutylen, ein hochmolekulares Isobutylen-Isopren-Copolymer oder ein vulkaniserbares niedermolekulares Isobutylen-Isopren-Copolymer enthalten.

In der EP-OS 0 109 954 ist eine thermoplastische Klebstoffzusammensetzung beschrieben, die Kautschuk und ein damit mischbares klebendes Harz enthält. Das klebende Harz wird als Copolyetheresteramid bezeichnet.

Von den vorstehend beschriebenen Dichtstoffen haben am ehesten diejenigen Anwendung gefunden, die auf Copolymeren von Isobuten und Isopren beruhen. Diese Dichtstoffe haben jedoch den Nachteil, daß sie schon wenig oberhalb Raumtemperatur eine ausgeprägte Fließneigung zeigen, was die Formhaltung empfindlich beeinträchtigt. Versucht man, diese Tendenz durch höhere Vernetzung auszugleichen, geht die Haftung an der Glasoberfläche drastisch zurück.

Da bei Isolierglassystemen eine außerordentlich niedrige Wasserdampfdurchlässigkeit des Dichtstoffs erforderlich ist, ist man praktisch auf unpolare Materialien vom Typ der Butylkautschuke festgelegt. Es wurde versucht, auf Basis dieser Materialien einen vernetzten Dichtstoff direkt in der Dichtstoffuge aufzubauen. Zu diesem Zweck wurde dem Dichtstoff unmittelbar vor der Verarbeitung ein Härter zugesetzt. Theoretisch bietet diese Arbeitsweise den Vorteil, daß durch eine bessere Benetzung der Glasoberfläche im unvernetzten Zustand die Oberflächenhaftung verbessert wird. Dichtstoffe dieser Art konnten sich jedoch wegen Problemen bei der Durchhärtung nicht auf dem Markt durchsetzen. Eine Übersicht über diese Problematik findet sich bei L.A. Strecker, Adhesives Age 1975 (18) 11, Seiten 29-35.

Gerade die unpolare Natur der bekannten Dichtstoffe, die ihnen die an und für sich wünschenswerte Eigenschaft der Undurchlässigkeit für polare Gase und insbesondere Wasserdampf verleiht, ist gleichzeitig die Ursache für den Hauptnachteil dieser Dichtstoffe, nämlich die geringe Affinität zu so polaren Materialien wie Glas oder Metall. Gemäß der bereits erwähnten US-PS 4 169 822 versucht man diesem Problem zu begegnen, indem man dem Dichtstoff einen Haftvermittler zusetzt, der ein Epoxyharz und ein organisches Silan enthält, das mit dem Epoxyharz nicht reagiert. Da jedoch keine funktionellen Gruppen vorhanden sind, die mit den Komponenten des Haftvermittlers reagieren könnten, kommt eine echte chemische Bindung zwischen dem Dichtstoff und der Glasoberfläche nicht zustande. Aus diesem Grunde ist die Wasserbeständigkeit derart abgedichteter Isolierglasanordnungen unbefriedigend.

Schließlich ist in der brasilianischen Patentanmeldung 83 02 984 ein Klebstoff beschrieben, der partiell oxidierten Naturkautschuk enthält, der mit Verbindungen gehärtet ist, die mehrere aktive Wasserstoffatome aufweisen. Gemäß dieser Patentanmeldung wird Naturkautschuk zunächst mechanisch zerkleinert, sodann in Toluol gelöst und durch Einwirkung von Wasserstoffperoxid in Gegenwart von Essigsäure und Schwefelsäure epoxidiert. Das Produkt wird dann mit einer 10%-igen Lösung von Triethylentetramin in Chloroform vermischt und auf Aluminiumbleche aufgetragen. Eine gute Haftung wird erzielt, indem unter Druck bei 100°C 15 Minuten lang gehärtet wird.

Aufgabe der Erfindung ist es demgegenüber, einen verbesserten Dicht- und Klebstoff zu schaffen, der insbesondere eine wesentliche Vereinfachung der Herstellung von Isolierglasanordnungen erlaubt. Aufgrund seiner Eigenschaften soll der erfindungsgemäß zu schaffende Klebstoff nicht nur die Herstellung von Einfachsystemen mit ausreichender Festigkeit ermöglichen, sondern insbesondere auch die Herstellung von abstandhalterfreien Isolierglasanordnungen. Zu diesem Zweck soll der erfindungsgemäß zu schaffende Klebstoff einerseits eine hohe Wasserdampfundurchlässigkeit aufweisen, andererseits soll er auf Glas ausreichend gut haften, so daß auf die Verwendung eines separaten Klebstoffs verzichtet werden kann. Schließlich sollen erfindungsgemäß die mechanischen Eigenschaften des Dicht- und Klebstoffs den Verzicht auf einen starren Abstandhalter bei einer Isolierglasanordnung möglich machen.

Die erfindungsgemäße Aufgabe wird durch einen Dicht- und Klebstoff gemäß Kennzeichen des Hauptanspruchs gelöst.

Überraschenderweise wurde gefunden, daß die Dichtstoffformulierungen, welche auf epoxidiertem Naturkautschuk beruhen, die Nachteile der bekannten Dichtstoffe nicht aufweisen und sich somit vorzüglich zur Herstellung von abstandhalterfreien Isolierglasanordnungen eignen.

Unmodifizierter Naturkautschuk weist eine für Dichtstoffe zu hohe Gasdurchlässigkeit auf. Es zeigt sich jedoch, daß bei einem zunehmenden Gehalt an Epoxygruppen die Gasdurchlässigkeit abnimmt. Wenn etwa 50% der in dem Naturkautschuk vorhandenen Doppelbindungen epoxidiert sind, ist die Gasdurchlässigkeit des Materials minimal. Bei höherem Epoxidierungsgrad steigt die Gasdurchlässigkeit wieder an. Bislang galt der unpolare Butylkautschuk als das Elastomere mit der niedrigsten Durchlässigkeit für Gase. Trotz des hohen Anteils an polaren Epoxygruppen zeigt Naturkautschuk mit einem Epoxidierungsgrad von 50% eine genauso niedrige Gasdurchlässigkeit wie Butylkautschuk (vgl. C.S.L. Baker, I.R. Gelling, R. Newell, Gummi, Fasern, Kunststoffe 38, (1985) 8, Seiten 410-419).

Der zu 50% epoxidierte Naturkautschuk ist ein Polymer, das aus Einheiten der Formel I

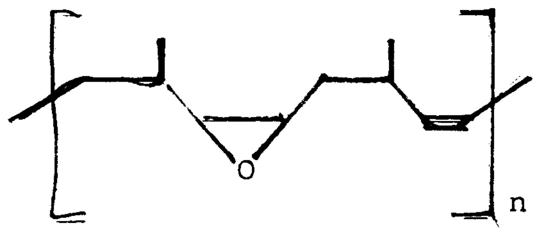

I

aufgebaut ist.

Besonders überraschend ist es, daß durch die Epoxydierung des Naturkautschuks auch die Wasserdampfdurchlässigkeit drastisch vermindert wird. Man hätte im Gegenteil erwartet, daß die Einführung von Oxiranringen und auch in geringem Umfang von Hydroxylgruppen die Wasserdampfdiffusion durch das Material hindurch begünstigt.

Überraschend ist auch, daß durch Umsetzung von epoxidierten Naturkautschuk mit einem geeigneten Vernetzungsmittel mit freien primären und sekundären Aminogruppen ein vernetztes Elastomer entsteht, welches keinerlei Tendenz zum Fließen zeigt und dessen Wasserdampfdurchlässigkeit nach wie vor an die von Butylkautschuk heranreicht.

Die Anwesenheit einer relativ großen Anzahl von Epoxy- und gegebenenfalls von Hydroxygruppen in dem erfindungsgemäßen Dichtstoff ermöglicht bei Verwendung von geeigneten Haftvermittlern die Ausbildung einer echten chemischen Bindung zwischen Dichtstoff und Glasoberfläche. Dadurch wird bei einer Isolierglasanordnung das Eindringen von Feuchtigkeit entlang der Grenzfläche zwischen Dichtstoff und Glas, das bei den bekannten Dichtstoffen häufig mit teilweiser oder völliger Delaminierung verbunden ist, wirkungsvoll unterbunden.

Ein weiterer erfindungsgemäßer Vorteil wird durch die ausgeprägte Vernetzung des Dichtstoffs erzielt. Es wird eine so gute strukturelle Festigkeit erreicht, daß bei Verwendung des Dichtstoffs in einer Isolierglasanordnung auf das übliche Aluminiumprofil als Abstandhalter verzichtet werden kann, was eine bedeutende Einsparung an Material- und Arbeitskosten bedeutet.

Die erfindungsgemäßen Vorteile werden erzielt durch die Kombination eines epoxidierten Naturkautschuks mit weiteren Epoxyverbindungen aus der Klasse der Epoxyharze und mit polyfunktionellen Vernetzungsmitteln, welche nebeneinander sowohl primäre und sekundäre Aminogruppen oder Mercaptogruppen als auch Trialkoxysilylgruppen tragen.

Epoxidierter Naturkautschuk ist durch Epoxidierung von Naturkautschuklatex leicht zugänglich. Dieses Material ist im Handel von der Fa. Malaysian Rubber Producers unter den Bezeichnungen ENR 50 und ENR 25 in entwässerter Form in Ballen erhältlich. Im Vergleich zu anderen vollsynthetischen Dien-Elastomeren ist es preiswert. Aufgrund seiner günstigen Eigenschaften ist es für den Einsatz in den erfindungsgemäßen Dichtstoffen hervorragend geeignet.

Zum Vergleich wurden Versuche mit anderen epoxidierten Dien-Elastomeren durchgeführt, beispielsweise mit synthetischem cis-1,4-Polyisopren, welches einen ähnlichen Aufbau wie Naturkautschuk aufweist, cis-1,4-Polybutadien, 1,2-Polybutadien oder deren Copolymeren mit Styrol, sowie mit epoxidierten Triblockcopolymeren auf Basis von Styrol-cis-1,4-butadien-styroloder Styrol-cis-1,4-isopren-styrol. Mit diesen Versuchen stieß man entweder auf Schwierigkeiten bei der Epoxidierung oder es zeigte sich, daß die auf Basis dieser Dien-Elastomeren erhaltenen Dichtstoffe nicht dieselben günstigen Eigenschaften wie diejenigen auf Basis von epoxidiertem Naturkautschuk zeigten. Außerdem ist die Verwendung dieser voll synthetischen Dien-Elastomeren wegen ihres hohen Preises unwirtschaftlich.

Der im Handel erhältliche epoxidierte Naturkautschuk wird durch ein Verfahren hergestellt, bei dem der Naturkautschuk als wäßriger Latex epoxidiert wird. Diese Arbeitsweise ist wesentlich günstiger als die in der brasilianischen Patentanmeldung 83 02 984 erwähnte Epoxidierung in Toluol, welche wegen der Verwendung des Lösungsmittels aufwendig und teuer ist und zu minderwertigen Produkten führt, da die Entfernung des Lösungsmittels nur unvollständig möglich ist.

Der durch Epoxidierung von wäßrigem Latex erhaltene epoxidierte Naturkautschuk enthält beträchtliche Gelanteile. Diese können zur Folge haben, daß die daraus hergestellten Dichtstofformulierungen inhomogen sind. Obwohl zu befürchten war, daß durch Einwirkung von Scherkräften bei erhöhter Temperatur eine Vernetzung durch Öffnung der Oxiranringe eintritt, wurde überraschenderweise gefunden, daß eine Homogenisierung des Materials bei erhöhter Temperatur möglich und zweckmäßig ist. Dadurch wird ein Material mit erniedrigter Viskosität erhalten, welches in vielen technischen Lösungsmitteln vollständig löslich ist und vollkommen homogene Dichtstofformulierungen liefert. Im Gegensatz zu anderen Elastomeren enthält das durch einen derartigen Mastikationsprozeß erhaltene Material keine leicht flüchtigen Bestandteile. Im Hinblick auf Isolierglasanordnungen hat dies den weiteren Vorteil zur Folge, daß sich auf den Glasscheiben keine unerwünschten Beschläge bilden können, d.h., daß das sogenannte Fogging verhindert wird. Gemäß einer erfindungsgemäß bevorzugten Arbeitsweise wird der epoxidierte Naturkautschuk in einem hohe Scherkräfte aufbauenden Gummikneter 20 Minuten lang bei 120 ° C mastiziert.

Die erfindungsgemäßen Dicht- und Klebstoffe enthalten neben epoxidierten Naturkautschuk weitere artgleiche Epoxyverbindungen aus der Klasse der Epoxyharze. Mit diesen Verbindungen läßt sich die Vernetzungsdichte und damit der Elastizitätsmodul der Dichtungsmasse steuern. Weiterhin wird durch diese Verbindungen die Glashaftung positiv beeinflußt.

Prinzipiell läßt sich jedes beliebige Epoxyharz in epoxidierten Naturkautschuk einarbeiten, sofern es mit diesem in der Wärme ausreichend mischbar ist, d.h. eine homogene Mischung ergibt. Es können aliphatische und/oder aromatische Epoxyharze verwendet werden, deren Molmasse im Bereich von 200 bis 2000 liegt. Für erfindungsgemäße Dicht- und Klebstoffe, die zur Herstellung von Isolierglasanordnungen verwendet werden sollen, sind aromatische Glycidylether bevorzugt. Unter diesen sind besonders bevorzugt Bisphenol-A-diglycidylether, Bisphenol-F-diglycidylether, Glycidylether von Novolakharzen und deren Mischungen.

Unter den erfindungsgemäß einsetzbaren Bisphenoldiglycidylethern sind Verbindungen der Formel II

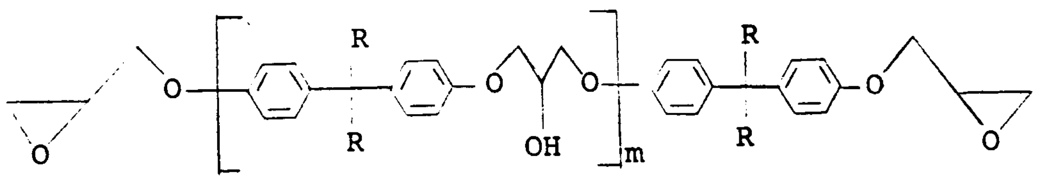

II

zu verstehen, in welcher R ein Wasserstoffatom oder eine Methylgruppe bedeutet und m eine ganze Zahl von 0 bis 5 ist.

Unter den erfindungsgemäß einsetzbaren Glycidylethern von Novolakharzen sind Verbindungen der Formel III

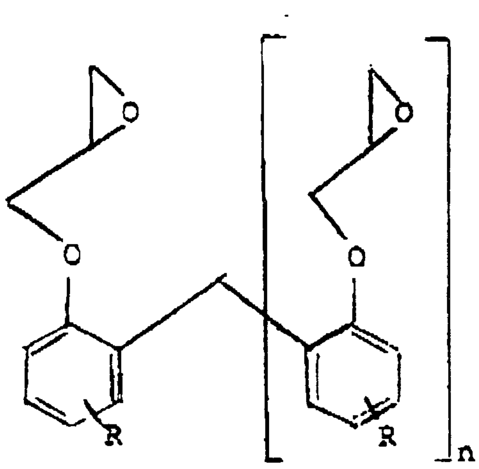

III

zu verstehen, in welcher R die vorstehende Bedeutung hat und n eine ganze Zahl von 1 bis 4 ist.

Wie bereits angedeutet, ist es für die Ausbildung einer dauerhaften Abdichtung einer Isolierglasanordnung unerläßlich, daß zwischen Glas und Dichtstoff eine chemische Bindung ausgebildet wird, welche gegen Hydrolyse stabil ist. Voraussetzungen dafür sind einerseits eine ausreichende Benetzung der Glasoberfläche durch den Dichtstoff, andererseits das Vorhandensein reaktiver Gruppen, welche mit der sehr polaren Glasoberfläche in Reaktion treten können. Da vom Dichtstoff eine ausreichende Strukturfestigkeit gefordert wird, muß er nach dem Aufbringen in geeigneter Weise vernetzt werden. Das Verhalten in

der Kälte, das durch die Glastemperatur $T_g$ beschrieben wird, ändert sich dadurch nur wenig. Es wird jedoch eine wesentliche Verbesserung der Festigkeit bei erhöhten Temperaturen bis zu etwa 80 °C erzielt. Dadurch ist der Dichtstoff in der Lage, den auftretenden mechanischen Belastungen ohne bleibende Verformung zu widerstehen. Beispielsweise treten bei einer Isolierglasanordnung die folgenden mechanischen Belastungen auf:

1. cyclische Lastwechsel als Folge von Temperaturänderungen, die einerseits durch unterschiedliche Längenänderung der beteiligten Komponenten, andererseits durch Druckänderung im Inneren der Anordnung hervorgerufen werden;
2. statische Lasten, welche vom Eigengewicht der Scheibe herrühren.

Der erfindungsgemäße Dicht- und Klebstoff vermag den vorstehend aufgezählten Anforderungen in vollem Umfang zu genügen. Dies beruht nicht zuletzt auf den erfindungsgemäß eingesetzten Vernetzungsmitteln.

Es ist seit langem bekannt, daß Polyamine und Polyaminoamide gute Härter für Epoxyklebstoffe sind und sich insbesondere für die Aushärtung bei Raumtemperatur eignen. Ihre für diese Zwecke erwünschte hohe Härtungsgeschwindigkeit beschränkt allerdings die Verarbeitungszeit auf einen Zeitraum von 15 bis 60 Minuten. Die mit einfachen Polyaminen und Polyaminoamiden ausgehärteten Dichtstoffe weisen jedoch den Nachteil auf, daß die mit ihnen hergestellten Fugen adhäsiv versagen und nicht das gewünschte kohäsive Bruchverhalten zeigen. Die erfindungsgemäß eingesetzten Vernetzungsmittel unterscheiden sich von den oben genannten Härtern dadurch, daß sie neben Aminogruppen in ausreichender Zahl Alkoxysilylgruppen enthalten. Erfindungsgemäß bevorzugt sind Polyamine und Polyaminoamide, die mindestens je eine primäre und eine sekundäre Aminogruppe sowie mindestens eine Trialkoxysilylgruppe enthalten. Diese Verbindungen lassen sich aus den entsprechenden Polyaminen durch Umsetzung mit 3-Chlorpropyltrialkoxysilanen gewinnen. Diese Umsetzung ist in der US-PS 2 971 864 beschrieben, die hiermit durch Bezugnahme zum Gegenstand der vorliegenden Beschreibung gemacht wird.

Beispiele für die erfindungsgemäß einsetzbaren Vernetzungsmittel sind die Verbindungen, die durch Substitution von Wasserstoffatomen von Aminogruppen durch Trialkoxysilylpropylgruppen aus den folgenden Polyaminen erhältlich sind: 1,2-Diaminoethan, 1,3-Diamino-n-propan, 1,4-Diamino-n-butan, 1,6-Diamino-n-hexan, Diethylentriamin, Triethylentetramin, Aminoendgruppen enthaltendes Polyamid aus dimerer Fettsäure und Hexamethylendiamin sowie Aminoendgruppen enthaltendes Polyamid aus dimerer Fettsäure und Diethylentriamin.

Die erfindungsgemäß bevorzugten Vernetzungsmittel sind Trialkoxysilylgruppen tragende Polyamine der Formeln IVa, IVb, IVc

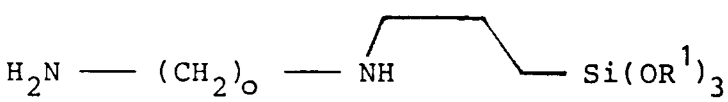 IVa

in der durch $R^1$ $C_1$ bis und $C_4$-Alkylreste bezeichnet sind, die gleich oder verschieden sein können, und o eine ganze Zahl von 2 bis 6 ist,

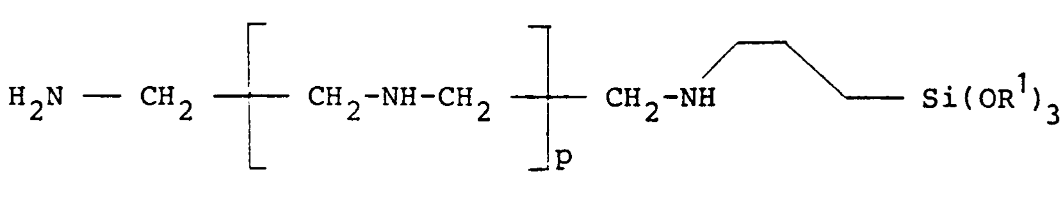 IVb

in der $R^1$ die obige Bedeutung hat, und p 1 oder 2 ist,

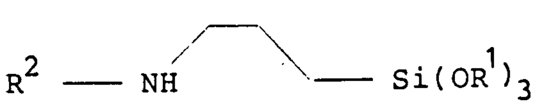 IVc

in der $R^1$ die obige Bedeutung hat, und $R^2$ eine Polyaminoamideinheit bedeutet, die 1 oder 2 Aminogruppen aufweist.

Eine andere Möglichkeit, Epoxyklebstoffe zu härten, liegt in der Verwendung von Polymercaptanen, was ebenfalls dem Fachmann seit langem bekannt ist. Aufgrund der hohen Nucleophilie der Mercaptogruppen bewirken diese eine leichte Öffnung des Oxironringes, was bereits bei Raumtemperatur zur Vernetzung der Epoxyharz-Ketten führt. Die ohnehin schon schnelle Reaktion läßt sich durch den Zusatz von Aminen weiter beschleunigen, was jedoch nicht für alle Anwendungen wünschenswert ist.

In bezug auf die erfindungsgemäßen Dicht- und Klebstoffe zeigte sich, daß Polymercaptane ebenfalls ausgezeichnet zur Vernetzung von epoxidiertem Naturkautschuk enthaltenden Formulierungen geeignet sind. Auch hier sorgt der Einbau von Trialkoxysilylgruppen in das Vernetzermolekül für das wünschenswerte kohäsive Verhalten.

Bevorzugte Vernetzungsmittel aus der Reihe der Trialkoxysilylgruppen tragenden Polymercaptane sind daher Verbindungen der Formel V

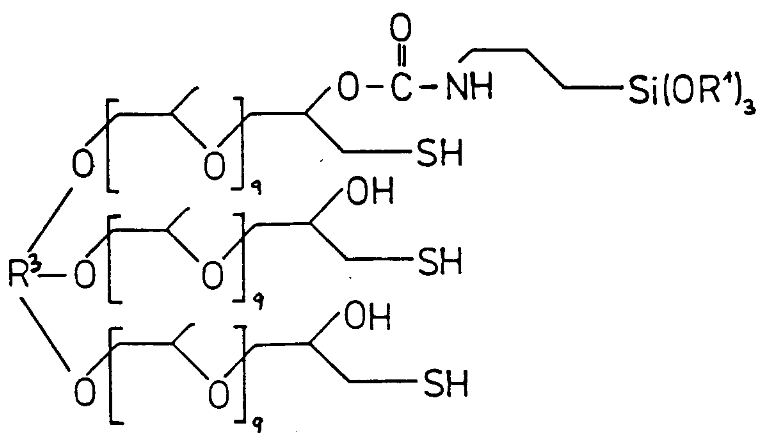

V

in welcher durch R $C_1-C_4$-Alkylreste bezeichnet sind, die gleich oder verschieden sein können, $R^3$ einen aliphatischen Kohlenwasserstoffrest darstellt und die Zahl q die Werte 1 und 2 annehmen kann.

Solche Verbindungen können ausgehend vom entsprechenden an der OH-Gruppe unsubstituierten trifunktionellen Mercaptan, welches von der Fa. Diamond Shamrock unter dem Namen Capcure 3-800 vertrieben wird, durch einfache Umsetzung mit 3-Isocyanatopropyl-trialkoxysilan in Gegenwart von Zinnkatalysatoren wie biespielsweise Dibutylzinnlaurat erhalten werden. Eine Umsetzung mit niedermolekularen Polymercaptanen scheidet wegen des unverträglichen Geruchs dieser relativ leicht flüchtigen Produkte für die gewünschte Anwendung aus.

Es ist vorteilhaft, in die erfindungsgemäßen Dichtstoffformulierungen weitere Zusätze einzuarbeiten, die die Eigenschaften des Dichtstoffs insbesondere im Hinblick auf den Einsatz zur Abdichtung von Isolierglasanordnungen optimieren. Als Haftungsverbesserer erweisen sich Polymere mit guter Glashaftung wie Ethylenvinylacetat-Copolymere, Polyvinylbutyral, Polyetherpolyamide oder Polyesterpolyamide als nützlich. Diese Substanzen erhöhen die Haftung jedoch nur durch physikalische Wechselwirkung und sind daher von solchen Mitteln zu unterscheiden, die durch chemische Reaktion an der Oberfläche einer Verankerung bewirken, wie die als Vernetzungsmittel eingesetzten trialkoxysilylpropylsubstituierten Polyamine oder Polymercaptane.

Darüber hinaus können den erfindungsgemäßen Dichtstofffomulierungen weitere Alkoxysilylverbindungen zugesetzt werden, beispielsweise 3-(Dimethylamino)-propyltrimethoxysilan, 3-Mercaptopropyl-trimethoxysilan oder 3-Glycidyloxypropyltrimethoxysilan. Diese Verbindungen erhöhen die Haftung in geringerem Maß als die erfindungsgemäßen Vernetzungsmittel. Sie sind jedoch in der Herstellung billiger.

Klebrigmacher dienen dazu, den Dichtungsmassen während des Auftragens auf das Glas bei etwa 100 °C eine erhöhte Oberflächenklebrigkeit und damit eine bessere Anfangshaftung zu verleihen. Beispiele dafür sind Phenol-Terpen-Harze, Cyclopentadienharze, hydrierte Harzsäureester und synthetische Kohlenwasserstoffharze.

Zur Weichmachung der Dichtstoffe und zur Erleichterung ihrer Verarbeitung werden Weichmacher eingearbeitet. Hierfür kommen in erster Linie niedrigmolekulare Polyisobutene sowie Polybutene in Frage.

Geeignete Füllstoffe zur Verbesserung der mechanischen Eigenschaften der Dichtstoffe sind sogenannte verstärkende Füllstoffe wie verschiedene Rußsorten oder pyrogene Kieselsäuren.

Um den schädlichen Einfluß der UV-Strahlung auf die Dichtstoffe zu vermindern, kann der Zusatz von Alterungs- und UV-Schutzmitteln erfolgen. Im allgemeinen ist jedoch dieser Zusatz bei rußgefüllten Dichtstoffen nicht unbedingt erforderlich, da Ruß bereits eine ausgezeichnete stabilisierende Wirkung aufweist. Während sich gegen einen radikalischen Abbau Zusätze von sterisch gehinderten Phenolen sehr bewährt haben, empfiehlt sich zum Schutze gegen UV-Strahlung der Zusatz von UV-Stabilisatoren. Beispiele dafür sind Oxalsäureanilide, Hydroxybenzotriazole und sterisch gehinderte Piperidinderivate.

Die Herstellung der erfindungsgemäßen Dichtstofformulierungen kann durch einfaches Compoundieren in einem geeigneten Kneter erfolgen. Beim abschließenden Einarbeiten des aminogruppen- oder mercaptangruppenhaltigen Vernetzungsmittels ist darauf zu achten, daß die Temperatur nicht höher als 40°C ist, damit nicht eine Vorvernetzung des Dichtstoffs vor der Anwendung stattfindet.

Die besten Ergebnisse bezüglich Glashaftung und Dauerhaftigkeit der entstehenden Bindung werden erhalten, wenn der Dichtstoff unmittelbar nach seiner Herstellung auf die Glasoberfläche aufgebracht wird. Es ist daher erfindungsgemäß bevorzugt, den Dichtstoff aus zwei vorgemischten Komponenten direkt vor der Anwendung zuzubereiten. Dabei enthält die eine Komponente den epoxidierten Naturkautschuk, die weiteren Epoxyverbindungen, die nicht mit Epoxygruppen reagierenden Haftungsverbesserer, die Alterungs- und UV-Schutzmittel und einen Teil der Füllstoffe. Die andere Komponente enthält das Vernetzungsmittel, weitere Haftvermittler, die Klebrigmacher, die Weichmacher und den Rest der Füllstoffe. Ein effizientes Vermischen dieser Komponenten vor dem Aufbringen auf das Glas läßt sich durch einen geeigneten Zweiwellenextruder bewerkstelligen. Die beiden genannten Komponenten weisen eine ausreichende Lagerstabilität auf.

Im folgenden wird die Erfindung anhand von Beispielen näher erläutert. In den Beispielen werden verschiedene Dichtstofformulierungen und deren physikalische Eigenschaften beschrieben. Für den Einsatz von Dichtstoffen zur Abdichtung von Isolierglasanordnungen sind die folgenden Eigenschaften von besonderer Bedeutung:

1. Wasserdampfdurchlässigkeit
2. Haftung auf Glas und Zugfestigkeit der Glas/Glas-Verklebung in Abhängigkeit von der Dehnung
3. Kriechneigung unter statischer Last
4. Beständigkeit der Glas/Glas-Verklebung gegen Wasser bei normaler und erhöhter Temperatur und gegen UV-Strahlung.

Um diese vier Gruppen von Eigenschaften zu untersuchen, wurden die folgenden Prüfmethoden angewendet:

1. Die Bestimmung der Wasserdampfdurchlässigkeit der Dichtstoffe erfolgte an 1,5 mm dicken Folien. Diese Folien wurden mittels einer heizbaren Presse erhalten, indem der betreffende Dichtstoff zwischen Platten gepreßt wurde, die mit Polytetrafluorethylen (PTFE) beschichtet waren. Kreisrunde Folien mit einem Durchmesser von 105 mm wurden in ein Testgerät eingesetzt, das von der Fa. Lyssy unter der Typenbezeichnung L80 erhältlich ist. Der für die Wasserdampfdurchlässigkeit ermittelte Wert wird in $g/m^2/24$ Stunden angegeben.

2. Zur Überprüfung der Haftung auf Glas und der Zugfestigkeit wurde aus den erfindungsgemäßen Dichtstoffen bei 60°C ein Profil mit einem quadratischen Querschnitt von 10 x 10 mm extrudiert. Ein 50 mm langes Stück dieses Profils wurde mitten auf einer entfetteten quadratischen Glasplatte mit einer Dicke von 5 mm und einer Kantenlänge von 50 mm parallel zu einer der Kanten aufgebracht. Eine zweite Glasplatte wurde darüber gelegt. An den Außenseiten der Glasplatten wurden Distanzstücke eingelegt und die Platten wurden mittels geeigneter Klammern auf einen Abstand von 8 mm vorgepreßt.

In einem Wärmeschrank wurde die Anordnung 15 Minuten lang auf 120°C erwärmt, um eine ausreichende Benetzung sicherzustellen. Nach einer Abkühlzeit von 30 Minuten wurden die Distanzstücke entfernt und die Anordnung wurde 7 Tage lang bei Normalklima 23/50-1 gemäß DIN 50514 gelagert. Danach wurden die Prüfkörper mittels geeigneter Aufnahmevorrichtungen in eine Instron-Zugprüfmaschine gespannt und die Zugfestigkeit bei einer Zugeschwindigkeit von 10 mm pro Minute bestimmt. Gleichzeitig wurde die Bruchdehnung ermittelt und festgestellt, ob der Abriß im Dichtstoff selbst, also kohäsiv, oder an der Grenzfläche zwischen Dichtstoff und Glas, also adhäsiv erfolgte.

3. Zur Ermittlung der Kriechneigung unter statischer Last wurde auf ähnliche Weise, wie vorstehend beschrieben, eine Überlappverklebung von Glasplatten hergestellt.

Es wurden 5 mm dicke Glasplatten mit einer Länge von 100 mm und einer Breite von 25 mm verwendet. Die Anordnung wurde in vertikaler Lage aufgehängt und mit einem Gewicht von 150 g belastet. Zur Ermittlung des Widerstandes gegen statische Last wurde die Verschiebung der belasteten Glasplatte gegenüber der fest eingespannten Glasplatte nach 6 Stunden bei Temperaturen von 20°C und 60°C ermittelt.

4. Um das Verhalten der Dichtstoffe gegenüber gleichzeitiger Einwirkung von Wasser und UV-Strahlung zu untersuchen, wurden Prüfkörper, wie sie unter 2. beschrieben sind, 1000 Stunden lang bei 23°C unter Wasser intensiver UV-Strahlung ausgesetzt. Danach wurden sie bei Raumtemperatur getrocknet. Anschließend wurde die Zugfestigkeit bestimmt. In einem weiteren Test wurden die Prüfkörper 2 Wochen lang bei 60°C und 100% relativer Luftfeuchtigkeit gelagert. Anschließend wurden die verbliebene Zugfestigkeit sowie das Bruchverhalten ermittelt.

## Vergleichsbeispiel

Um den Unterschied der erfindungsgemäßen Dichtstoffe zu herkömmlichen Heißschmelz-Dichtstoffen auf Basis von Butylkautschuk (Isobuten-Isopren-Kautschuk) zu verdeutlichen, wurde zu Vergleichszwecken eine Formulierung hergestellt, wie sie in der DE-OS 24 24 264 beschrieben ist. Dazu wurden die folgenden Bestandteile verwendet:

| | | |
|---|---|---|
| Isobuten-Isopren-Copolymer | (EX 214) | 28,00 Gew.% |
| Bisphenol-A-diglycidylether | (Epikote 828) | 5,00 Gew.% |
| Polybuten | (Indopol 1900) | 35,50 Gew.% |
| Polyterpenharz | (Wing Tack 95) | 20,00 Gew.% |
| Ofenruß | (Printex 80) | 8,00 Gew.% |
| 3-(2-Aminoethylamino)-propyltrimethoxysilan | (Damo) | 3,00 Gew.% |
| Stearinsäure | | 0,50 Gew.% |

In einem thermostatisierten Brabender Nockenkneter N 50 H, ausgestattet für Vakuumbetrieb, wurden das schwach vernetzte Isobuten-Isopren-Copolymer, die Stearinsäure und das Polyterpenharz bei 100°C und 60 UpM 5 Minuten lang geknetet. Als die Mischung homogen war, wurden das Polybuten und der Bisphenol-A-diglycidylether eingebracht und homogenisiert. Nach Einarbeiten des Rußes wurde weitere 10 Minuten mit 60 UpM bei 100°C geknetet, bis wiederum eine homogene Mischung erzeugt war. Dann wurde auf 40°C abgekühlt und das 3-(2-Aminoethylamino)-propyltrimethoxysilan eingearbeitet. Nach 5-minütigem Kneten bei 40°C mit 30 UpM unter einem Vakuum von 10 hPa wurde der Dichtstoff aus dem Kneter genommen und mittels eines Brabender Extruders 10 DW bei 100°C durch eine geeignete Düse extrudiert, wobei ein Profil mit einem quadratischen Querschnitt von 10 x 10 mm erhalten wurde.

## Beispiel 1

Eine erfindungsgemäße Dichtstofformulierung wurde aus den folgenden Bestandteilen hergestellt:

| Chemische Zusammensetzung | Handelsname | Beispiel 1 |
|---|---|---|
| epoxidierter Naturkautschuk | (ENR 50) | 48,00 Gew.% |
| Bisphenol-A-diglycidylether | (Epikote 828) | 20,00 Gew.% |
| Polyisobuten | (Oppanol B 15) | 10,00 Gew.% |
| Polyterpenharz | (Wing Tack 95) | 10,00 Gew.% |
| Ofenruß | (Printex 80) | 8,00 Gew.% |
| 3-(2-Aminoethylamino)-propyltrimethoxysilan | (Damo) | 4,00 Gew.% |

Epoxidierter Naturkautschuk mit einem Epoxidierungsgrad von 50% wurde in einem thermostatisierten Brabender Walzenkneter W30H bei 120°C und 150 UpM mastiziert, bis das Elastomer keinen aus der Drehmomentkurve erkennbaren Viskositätsabfall zeigte. Das so erhaltene Material war gelfrei und ohne Rückstand in Toluol und Chloroform löslich.

In einem für Vakuumbetrieb ausgestatteten thermostatisierten Brabender Nockenkneter N50H wurden in den derart mastizierten Naturkautschuk durch Kneten bei 100°C und 60 UpM das Polyterpenharz, das Polyisobuten, der Bisphenol-A-diglycidylether und der Ruß eingearbeitet. Zur Homogenisierung der Mischung waren etwa 20 Minuten erforderlich. Die Mischung wurde auf 40°C gekühlt. Das 3-(2-Aminoethylamino)-propyl-trimethoxysilan wurde eingearbeitet. Bei 40°C und 30 UpM wurde unter einem Vakuum von 10 hPa entgast. Der Dichtstoff wurde aus dem Kneter entnommen und mittels eines Brabender Extruders 10 DW bei 60°C durch eine geeignete Düse extrudiert, wobei ein Profil mit einem quadratischen Querschnitt von 10 x 10 mm erhalten wurde.

Die Eigenschaften des so hergestellten Dichtstoffs wurden auf die oben beschriebenen Weisen geprüft. Unter identischen Bedingungen wurde der gemäß dem Vergleichsbeispiel erhaltene Dichtstoff geprüft. Die für beide Materialien erhaltenen Ergebnisse sind in der folgenden Tabelle 1 einander gegenübergestellt.

**Tabelle 1**

| Eigenschaft | Vergleichsbeispiel | Beispiel 1 |
|---|---|---|
| Wasserdampfdurchlässigkeit ($g\ m^{-2}d^{-1}$) | 0,18 | 0,23 |
| Zugfestigkeit der Glas(Glas-Verklebung ($N\ cm^{-2}$) | 23 a | 99 k |
| Bruchdehnung (%) | 87 | 94 |
| Kriechneigung unter Last | | |
| bei 23°C (mm | 6,0 | 1,5 |
| bei 60°C (mm) | Versagen | 4,5 |
| Zugfestigkeit nach Bewitterung ($N\ cm^{-2}$) | | |
| 1000 h Wasser + UV | 14 a | 91 k |
| 2 Wochen bei 60°C und 100% rel. Feuchte | 8 a | 104 k |

Anmerkungen: a ... adhäsives Bruchverhalten
k ... kohäsives Bruchverhalten

Wie aus der Tabelle 1 ersichtlich, weist der Dichtstoff gemäß Beispiel 1 deutlich bessere Eigenschaften als der Dichtstoff des Vergleichsbeispiels auf. Während die Wasserdampfdurchlässigkeit nahezu auf dem gleichen Niveau liegt, ist die Glashaftung des erfindungsgemäßen Dichtstoffs wesentlich höher. Dieser zeigt auch das gewünschte kohäsive Bruchverhalten. Aufgrund der Vernetzung der erfindungsgemäßen Dichtstofformulierung bleibt die Kriechneigung selbst bei erhöhter Temperatur sehr gering. Der erfindungsgemäße Dichtstoff zeigt auch eine wesentlich verbesserte Resistenz gegen Feuchtigkeit, Wärme und ultraviolette Strahlung.

## Beispiele 2 bis 4

In diesen Beispielen wurde der Einfluß des Epoxidierungsgrades des Naturkautschuks, des Anteils an epoxidiertem Naturkautschuk sowie des Anteils zusätzlicher Epoxyharze auf die Dichtstofformulierung untersucht.

Die Dichtstoffe wurden auf die in Beispiel 1 beschriebene Weise aus den in der Tabelle 2 angegebenen Komponenten hergestellt.

### Tabelle 2

| Komponente | Anteil (Gew.%) | | |
|---|---|---|---|
| | Beispiel 2 | Beispiel 3 | Beispiel 4 |
| epoxidierter Naturkautschuk (ENR 25) 25% der Doppelbindungen epoxidiert | 48,00 | - | - |
| epoxidierter Naturkautschuk (ENR 50) 50% der Doppelbindungen epoxidiert | - | 40,00 | 32,00 |
| Polyisobuten (Oppanol B 15) | 10,00 | 10,00 | 10,00 |
| Polyterpenharz (Wing Tack 95) | 10,00 | 10,00 | 10,00 |
| Bisphenol-A-diglycidylether (Epikote 828) | 20,00 | 26,00 | 30,00 |
| Ofenruß (Printex 80) | 8,00 | 8,00 | 8,00 |
| 3-(2-Aminoethylamino)-propyltrimethoxysilan (Damo) | 4,00 | 6,00 | 10,00 |

Die gemäß diesen Beispielen erhaltenen Dichtstoffe wurden wiederum auf die oben beschriebenen Weisen geprüft. Die Ergebnisse sind in der Tabelle 3 zusammengestellt.

### Tabelle 3

| | Beispiel 2 | Beispiel 3 | Beispiel 4 |
|---|---|---|---|
| Zugfestigkeit ($N\ cm^{-2}$) | 30 | 151 | 161 |
| Bruchdehnung (%) | 112 | 34 | 16 |
| Bruchverhalten | kohäsiv | kohäsiv | kohäsiv |

Wie das Beispiel 2 zeigt, hat eine Erniedrigung des Epoxidierungsgrades des Naturkautschuks von 50% auf 25% bei ansonsten unveränderter Zusammensetzung des Dichtstoffs einen deutlichen Abfall der Zugfestigkeit auf Glas zur Folge, ohne daß die Bruchdehnung in nennenswertem Maß beeinflußt wird. Aus

den Beispielen 3 und 4 ist ersichtlich, daß eine Verminderung des Gehalts an epoxidiertem Naturkautschuk bei gleichzeitiger Erhöhung des Gehaltes an Epoxyharz eine wesentliche Erhöhung der Glashaftung gegenüber Beispiel 1 bewirkt. Parallel dazu ist eine Zunahme der Härte des Dichtstoffs zu beobachten. Diese Beispiele zeigen, daß die Eigenschaften des erfindungsgemäßen Dichtstoffes sehr gut an den jeweiligen Verwendungszweck angepaßt werden können.

**Beispiele 5 und 6**

Auf die in Beispiel 1 beschriebene Weise wurden aus den in der Tabelle 4 angegebenen Komponenten Dichtstoffe hergestellt.

**Tabelle 4**

| Komponente | Anteil Gew.% Beispiel 5 | Anteil Gew.% Beispiel 6 |
|---|---|---|
| epoxidierter Naturkautschuk (ENR 50) 50% der Doppelbindungen epoxidiert | 48,00 | 48,00 |
| Polyisobuten (Oppanol B 15) | 10,00 | 10,00 |
| Polyterpenharz (Wing Tack 95) | 10,00 | 10,00 |
| Epoxyverbindung (Epikote 1002) | 20,00 | - |
| Epoxyverbindung (DEN 438) | - | 20,00 |
| Ofenruß (Printex 80) | 8,00 | 8,00 |
| (3-(2-Aminoethylamino)-propyl-trimethoxysilan (Damo) | 4,00 | 4,00 |

Die Glashaftung der erhaltenen Dichtstoffe wurde auf die oben beschriebene Weise untersucht. Die Ergebnisse sind in der Tabelle 5 gezeigt.

**Tabelle 5**

| | Beispiel 5 | Beispiel 6 |
|---|---|---|
| Zugfestigkeit (N $cm^{-2}$) | 133 | 105 |
| Bruchdehnung (%) | 37 | 53 |
| Bruchverhalten | kohäsiv | kohäsiv |

Diese Beispiele zeigen, welchen Einfluß die Verwendung zusätzlicher Epoxyverbindungen auf die Eigenschaften der erfindungsgemäßen Dichtstoffe hat.

**Beispiele 7 bis 9**

Auf die in Beispiel 1 beschriebene Weise wurden aus denen der Tabelle 6 angegebenen Komponenten Dichtstoffe hergestellt.

## Tabelle 6

| Komponente | Anteil (Gew.%) Beispiel 7 | Beispiel 8 | Beispiel 9 |
|---|---|---|---|
| epoxydierter Naturkautschuk (ENR 50) 50% der Doppelbindungen epoxidiert | 42,00 | 42,00 | 42,00 |
| Polyisobuten (Oppanol B 15) | 10,00 | 10,00 | 10,00 |
| Polyterpenharz (Wing Tack 95) | 10,00 | 10,00 | 10,00 |
| Ofenruß (Printex 80) | 8,00 | 8,00 | 8,00 |
| Epoxyharz (Epikote 828) | 20,00 | 20,00 | 20,00 |
| Umsetzungsprodukt aus Hexamethylendiamin und 3-Chlorpropyltrimethoxysilan | 10,00 | - | - |
| Umsetzungsprodukt aus einem Polyaminoamid (Versamid 125) und 3-Chlorpropyltrimethoxysilan | - | 10,00 | - |
| Umsetzungsprodukt aus einem Polymercaptan Capcure 3-800 und 3-Isocyanatopropyltrimethoxysilan | - | - | 10,00 |

Wiederum wurde die Glashaftung auf die oben beschriebene Weise untersucht. Die Ergebnisse sind in der Tabelle 7 gezeigt.

## Tabelle 7

| | Beispiel 7 | Beispiel 8 | Beispiel 9 |
|---|---|---|---|
| Zugfestigkeit (N $cm^{-2}$) | 93 | 87 | - |
| Bruchdehnung (%) | 142 | 192 | - |
| Bruchverhalten | kohäsiv | kohäsiv | kohäsiv |

- nicht gemessen

Diese Beispiele zeigen, welchen Einfluß eine Änderung des Vernetzungsmittels auf die Eigenschaften der erfindungsgemäßen Dichtstoffe hat. Im Vergleich mit den vorgehenden Beispielen zeigt sich, daß die Wahl des Vernetzungsmittels die Zugfestigkeit nicht wesentlich beeinflußt. Die Bruchdehnung und die Härte des Dichtstoffs können aber durch die Wahl des Vernetzungsmittels nachhaltig verändert werden. Auch auf diese Weise ist es möglich, die Eigenschaften des erfindungsgemäßen Dichtstoffs in gezielter Weise an den jeweiligen Einsatzzweck anzupassen.

**Beispiel 10**

In diesem Beispiel ist der Einsatz der erfindungsgemäßen Dichtstofformulierung als Zweikomponentensystem beschrieben.

Aus den folgenden Bestandteilen wurden eine Komponente A und eine Komponente B hergestellt:

| Komponente A | Anteil (Gew.%) |
|---|---|
| epoxidierter Naturkautschuk (ENR 50) 50% der Doppelbindungen epoxidiert | 48,00 |
| Bisphenol-A-diglycidylether (Epikote 828) | 20,00 |
| Ofenruß (Printex 80) | 4,00 |

| Komponente B | Anteil (Gew.%) |
|---|---|
| Polyisobuten (Oppanol B 15) | 10,00 |
| Polyterpenharz (Wing Tack 95) | 10,00 |
| Ofenruß (Printex 80) | 4,00 |
| 3-(2-Aminoethylamino)-propyl-trimethoxysilan (Damo) | 4,00 |

In einem für Vakuumbetrieb ausgestatteten Brabender Nockenkneter N 50H wurden in den gemäß Beispiel 1 mastizierten epoxidierten Naturkautschuk durch Kneten bei 100 °C und 60 UpM der Bisphenol-A-diglycidylether und der Ofenruß eingearbeitet. Zur Homogenisierung waren 10 Minuten erforderlich. Die so hergestellte Komponente A wurde auf 40 °C abgekühlt, aus dem Kneter entfernt und 3 Monate lang in einem Behälter unter Feuchtigkeitsausschluß gelagert.

Auch die Komponente B wurde durch Mischen hergestellt und ebenfalls 3 Monate in einem Behälter unter Feuchtigkeitsausschluß gelagert.

Nach dieser Lagerzeit wurden die beiden Komponenten zu einer Dichtstofformulierung vereinigt. Um die Verhältnisse in einem Zweiwellenextruder zu simulieren, wurden die Komponenten A und B bei 50 °C in einem Nockenkneter 5 Minuten lang gemischt. Der erhaltene Dichtstoff wurde unmittelbar darauf bei 60 °C zu einem Profil extrudiert. Wie oben beschrieben wurden Glasprüfkörper hergestellt. Die bei der Untersuchung der Glashaftung erhaltenen Ergebnisse sind in der folgenden Tabelle 8 den für die Formulierung gemäß Beispiel 1 erhaltenen Ergebnissen gegenübergestellt.

**Tabelle 8**

| Eigenschaft | Beispiel 1 | Beispiel 9 |
|---|---|---|
| Zugfestigkeit der Glas/Glas-Verklebung (N $cm^{-2}$) | 99 k | 96 k |
| Bruchdehnung (%) | 94 | 98 |
| Zugfestigkeit nach Bewitterung (N $cm^{-2}$) | | |
| 1000 h Wasser + UV | 91 k | 94 k |
| 2 Wochen bei 60°C und 100% rel. Feuchte | 104 k | 105 k |

Anmerkung: k ... kohäsives Bruchverhalten

Aus der Tabelle 8 geht eindeutig hervor, daß die Zwischenlagerung der vorgefertigten Komponenten A und B keinen Einfluß auf die Eigenschaften des Dichtstoffs hatte.

**Patentansprüche**

1. Dicht- und Klebstoff auf Basis von epoxidiertem Kautschuk, einem Polyamin- oder Polymercaptanvernetzungsmittel sowie üblichen Zusätzen wie Haftvermittlern, Klebrigmachern, Weichmachern, Füllstoffen, Alterungs- und UV-Schutzmitteln, **dadurch gekennzeichnet**, daß er 20 bis 80 Gew.% epoxidierten Naturkautschuk, 5 bis 30 Gew.% mindestens einer weiteren Epoxyverbindung und als Vernetzungsmittel ein Trialkoxysilylgruppen tragendes Polyamin oder Polymercaptan enthält.

2. Dicht- und Klebstoff nach Anspruch 1, **dadurch gekennzeichnet**, daß er 30 bis 60 Gew.% des epoxidierten Naturkautschuks enthält.

3. Dicht- und Klebstoff nach Anspruch 1 oder 2, **dadurch gekennzeichnet**, daß 10 bis 75 % der in dem Naturkautschuk vorhandenen Doppelbindungen epoxidiert sind.

4. Dicht- und Klebstoff nach einem der Ansprüche 1 bis 3, **dadurch gekennzeichnet**, daß 20 bis 60 % der in dem Naturkautschuk vorhandenen Doppelbindungen epoxidiert sind.

5. Dicht- und Klebstoff nach einem der Ansprüche 1 bis 4, **dadurch gekennzeichnet**, daß die weitere Epoxyverbindung aus der Reihe der Bisphenoldiglycidylether der Formel II

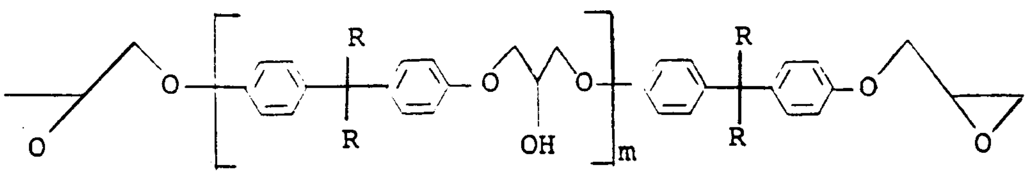

II

ausgewählt ist, in der R ein Wasserstoffatom oder eine Methylgruppe bedeutet und m eine ganze Zahl von 0 bis 5 ist.

**6.** Dicht- und Klebstoff nach einem der Ansprüche 1 bis 5, **dadurch gekennzeichnet**, daß die weitere Epoxyverbindung ein Novolakharz der Formel III

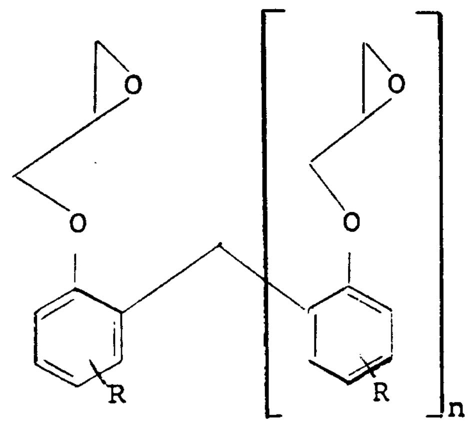

III

ist, in der R die obige Bedeutung hat und n eine ganze Zahl von 1 bis 4 ist.

**7.** Dicht- und Klebstoff nach einem der Ansprüche 1 bis 6, **dadurch gekennzeichnet**, daß das Vernetzungsmittel ein Trialkoxysilylgruppen tragendes Polyamin der Formel IVa

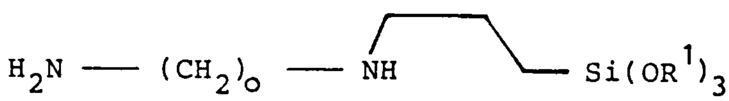

IVa

ist, in der durch $R^1$ $C_1$ bis $C_4$-Alkylreste bezeichnet sind, die gleich oder verschieden sein können, und o eine ganze Zahl von 2 bis 6 ist.

**8.** Dicht- und Klebstoff nach einem der Ansprüche 1 bis 6, **dadurch gekennzeichnet**, daß das Vernetzungsmittel ein Trialkoxysilylgruppen tragendes Polyamin der Formel IVb

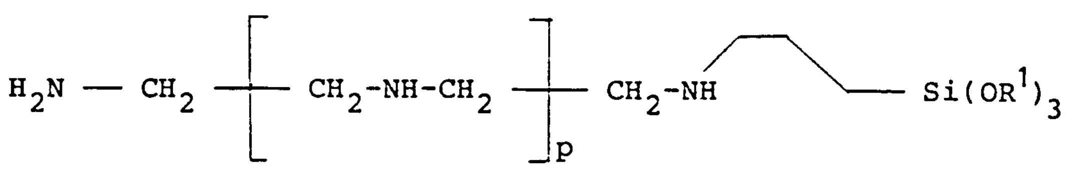

IVb

ist, in der $R^1$ die obige Bedeutung hat und p 1 oder 2 ist.

**9.** Dicht- und Klebstoff nach einem der Ansprüche 1 bis 6, **dadurch gekennzeichnet**, daß das Vernetzungsmittel ein Trialkoxysilylgruppen tragendes Polyamin der Formel IVc

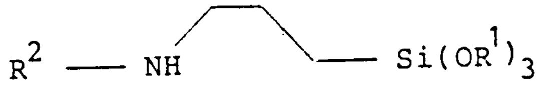

IVc

ist, in der $R^1$ die obige Bedeutung hat und $R^2$ eine Polyaminoamideinheit bedeutet, die 1 oder 2 Aminogruppen aufweist.

**10.** Dicht- und Klebstoff nach einem der Ansprüche 1 bis 6, dadurch gekennzeichnet, daß das Vernetzungsmittel ein Trialkoxysilylgruppen tragendes Polymercaptan der Formel V

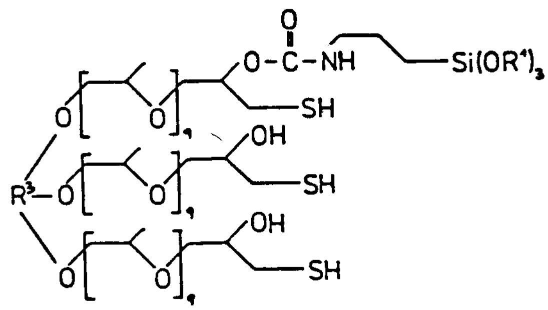

V

ist, in der $R^1$ die obige Bedeutung hat, $R^3$ einen aliphatischen Kohlenwasserstoffrest darstellt und die Zahl q die Werte 1 und 2 annehmen kann.

**11.** Verwendung des Dicht- und Klebstoffs nach einem der Ansprüche 1 bis 10, dadurch gekennzeichnet, daß er aus zwei getrennten Komponenten, von denen die eine den epoxidierten Naturkautschuk und die weitere Epoxyverbindung und die andere das Vernetzungsmittel enthält, direkt vor der Anwendung zubereitet wird.

**12.** Verwendung des Dicht- und Klebstoffs gemäß einem der Ansprüche 1 bis 11 in Anordnungen, die Bauteile aus Glas umfassen.

**13.** Verwendung gemäß Anspruch 12, **dadurch gekennzeichnet**, daß die Anordnung ein abstandhalterfreies Isolierglassystem ist.

**Claims**

**1.** A sealant and adhesive based on epoxidised rubber, a polyamine or polymercaptan cross-linking agent and customary additives such as adhesion promoters, tackifiers, plasticizers, fillers, antioxidants and UV protective agents, characterised in that it comprises 20 to 80 wt% of epoxidised natural rubber, 5 to 30 wt% of at least one further epoxy compound and as cross-linking agent a polyamine or polymercaptan, both having trialkoxysilyl groups.

**2.** A sealant and adhesive according to Claim 1, characterised in that it comprises 30 to 60 wt% of the epoxidised natural rubber.

**3.** A sealant and adhesive according to Claim 1 or 2, characterised in that 10 to 75 % of the double bonds present in the natural rubber are epoxidised.

**4.** A sealant and adhesive according to one of Claims 1 to 3, characterised in that 20 to 60 % of the double bonds present in the natural rubber are epoxidised.

**5.** A sealant and adhesive according to one of Claims 1 to 4, characterised in that the further epoxy compound is selected from the series of bisphenol diglycidyl ethers of formula II

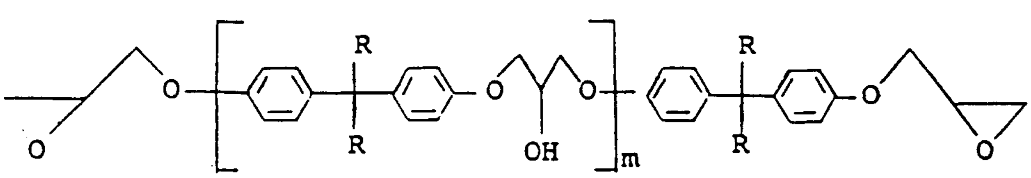

II

in which R signifies a hydrogen atom or a methyl group and m is a whole number from 0 to 5.

**6.** A sealant and adhesive according to one of Claims 1 to 5, characterised in that the further epoxy compound is a novolak resin of formula III

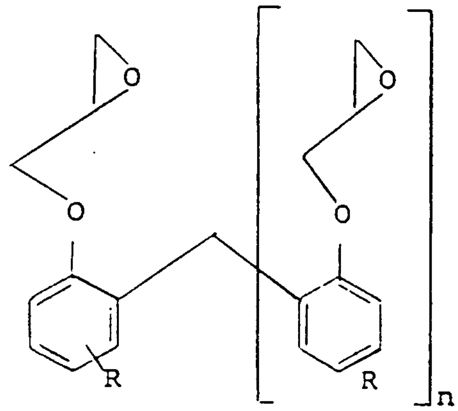

III

in which R has the above meaning and n is a whole number from 1 to 4.

**7.** A sealant and adhesive according to one of Claims 1 to 6, characterised in that the cross-linking agent is a polyamine having trialkoxysilyl groups of formula IVa

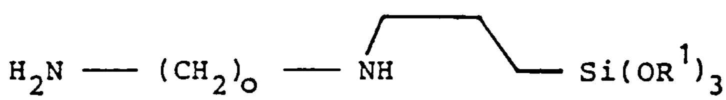

IVa

in which $R^1$ signifies $C_1$ to $C_4$ alkyl groups that can be the same or different and o is a whole number from 2 to 6.

**8.** A sealant and adhesive according to one of Claims 1 to 6, characterised in that the cross-linking agent is a polyamine having trialkoxysilyl groups of formula IVb

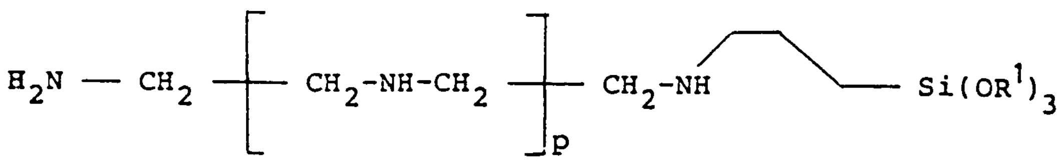

IVb

in which $R^1$ has the above meaning and p is 1 or 2.

**9.** A sealant and adhesive according to one of Claims 1 to 6, characterised in that the cross-linking agent is a polyamine having trialkoxysilyl groups of formula IVc

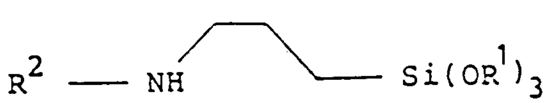

IVc

in which $R^1$ has the above meaning and $R^2$ signifies a polyaminoamide unit that has 1 or 2 amino groups.

**10.** A sealant and adhesive according to one of Claims 1 to 6, characterised in that the cross-linking agent is a polymercaptan having trialkoxysilyl groups of formula V

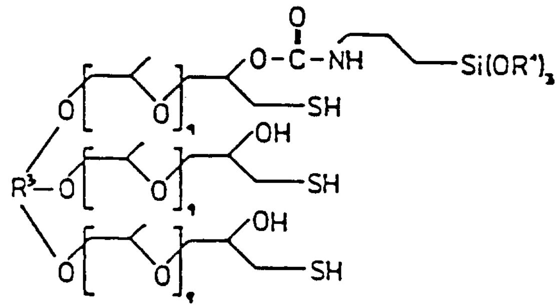

V

in which $R^1$ has the above meaning, $R^3$ represents an aliphatic hydrocarbon residue and the number q can take the values 1 and 2.

**11.** The use of the sealant and adhesive according to one of Claims 1 to 10, characterised in that it is made up directly before the application from two inhibited components, of which the one contains the epoxidised rubber and the further epoxy compound and the other the cross-linking agent.

**12.** The use of the sealant and adhesive according to one of Claims 1 to 11 in arrangements that include glass components.

**13.** The use according to Claim 12, characterised in that the arrangement is a spacer-free insulating glass system.

**Revendications**

**1.** Agent de scellement et adhésif à base de caoutchouc époxydé, d'un agent réticulent polyamine ou polymercaptan ainsi que des additifs usuels comme des promoteurs d'adhérence, des plastifiants adhésifs, des plastifiants souples, des charges, des agents antivieillissement et anti-UV, caractérisé en ce qu'il contient 20 à 80 % en poids de caoutchouc naturel époxydé, 5 à 30 % ou moins d'un autre composé époxy et comme agent réticulent une polyamine portant des groupes trialcoxysilyles ou un polymercaptan.

**2.** Agent de scellement et adhésif selon la revendication 1, caractérisé en ce qu'il comprend 30 à 60 % en poids de caoutchouc naturel époxydé.

**3.** Agent de scellement et adhésif selon la revendication 1 ou 2, caractérisé en ce que 10 à 75 % des liaisons doubles présentes dans le caoutchouc naturel sont époxydées.

**4.** Agent de scellement et adhésif selon l'une des revendications 1 à 3, caractérisé en ce que 20 à 60 % des liaisons doubles présentes dans le caoutchouc naturel sont époxydées.

**5.** Agent de scellement et adhésif selon l'une des revendications 1 à 4, caractérisé en ce qu'on choisit l'autre liaison époxy dans la série de bisphénoldiglycidyléthers de formule II :

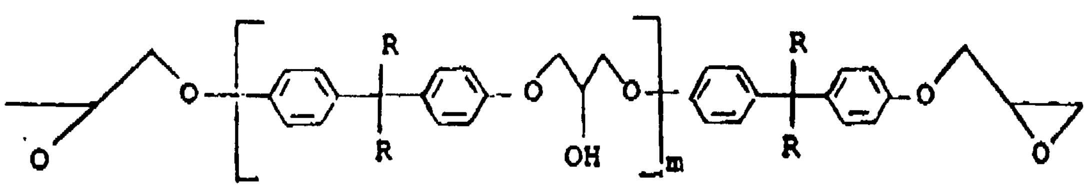

II

dans laquelle R est un atome d'hydrogène ou un groupe méthyle et m est un nombre entier de 0 à 5.

**6.** Agent de scellement et adhésif selon l'une des revendications 1 à 5, caractérisé en ce que l'autre composé époxy est une résine novolak de formule III :

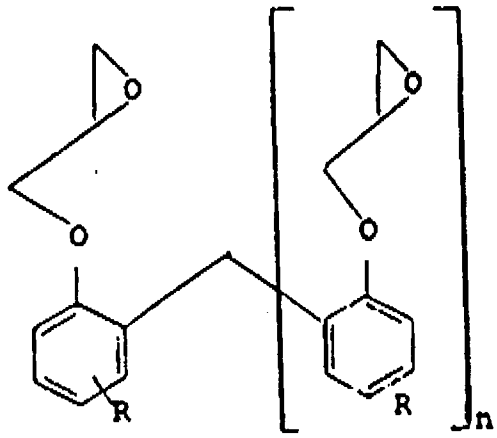

III

dans laquelle R a la signification ci – dessus et n est un nombre entier de 1 à 4.

7. Agent de scellement et adhésif selon l'une des revendications 1 à 6, caractérisé en ce que l'agent réticulent est une polyamine portant des groupes trialcoxysilyles de formule IVa :

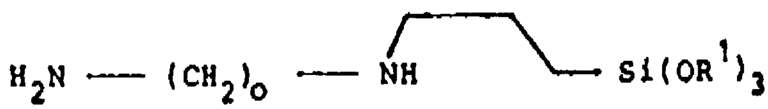

IVa

dans laquelle $R^1$ représente des restes alkyles de $C_1$ à $C_4$, qui peuvent être identiques ou différents, et o est un nombre entier de 2 à 6.

8. Agent de scellement et adhésif selon l'une des revendications 1 à 6, caractérisé en ce que l'agent réticulent est une polyamine portant des groupes trialcoxysilyles de formule IVb :

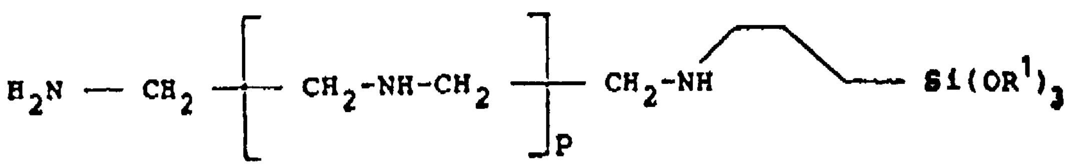

IVb

dans laquelle $R^1$ à la signification ci – dessus et p est 1 ou 2.

9. Agent de scellement et adhésif selon l'une des revendications 1 à 6, caractérisé en ce que l'agent réticulent est une polyamine portant des groupes trialcoxysilyles de formule IVc :

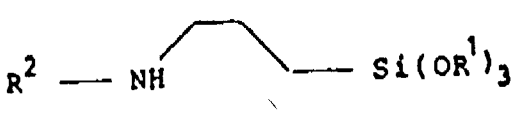

IVc

dans laquelle $R^1$ a la signification ci – dessus et $R^2$ est une unité polyaminoamide, qui présente 1 ou 2 groupes amino.

10. Agent de scellement et adhésif selon lune des revendications 1 à 6, caractérisé en ce que l'agent réticulent est un polymercaptan portant les groupes trialcoxysilyles de formule V :

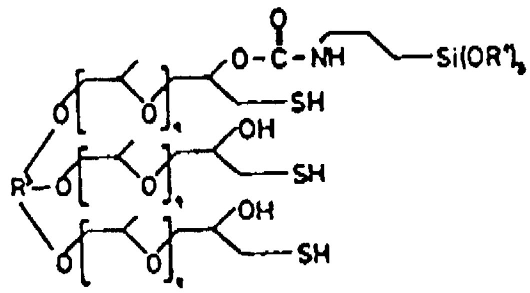

V

dans laquelle $R^1$ a la signification ci – dessus, $R^3$ représente un reste hydrocarbure aliphatique et le nombre q peut prendre les valeurs 1 et 2.

**11.** Utilisation de l'agent de scellement et adhésif selon l'une des revendications 1 à 10, caractérisé en ce qu'on le prépare juste avant l'utilisation à partir de deux composants bloqués, dont l'un contient le caoutchouc naturel et l'autre composé époxy et l'autre contient l'agent réticulent.

**12.** Utilisation d'agent de scellement et adhésif selon l'une des revendications 1 à 11 dans des dispositifs qui comprennent des pièces constitutives en verre.

**13.** Utilisation selon la revendication 12, caractérisée en ce que le dispositif est un système vitré isolant sans maintien d'intervalle.